# EUROPÄISCHE PATENTSCHRIFT

(11) **EP 1 278 118 B1**
(45) Veröffentlichungstag und Bekanntmachung des Hinweises auf die Patenterteilung: **26.07.2006**
(21) Anmeldenummer: 02010361.0
(22) Anmeldetag: 07.05.2002
(51) Int. Cl.: G06F 9/30, G06F 9/318

(54) **Verfahren und Vorrichtung zum Verarbeiten von Befehlen, die in einer Mehrzahl von Gruppen gruppiert sind**
Method and apparatus for processing of instructions grouped in a plurality of groups
Procédé et dispositif d'exécution d'instructions regroupées en plusieurs groupes

(30) Priorität: 19.07.2001 DE 10135291
(43) Veröffentlichungstag der Anmeldung: 22.01.2003
(73) Patentinhaber: Infineon Technologies AG, 81669 München (DE)
(72) Erfinder: Kronseder, Stephan, 83677 Greiling (DE)
(74) Vertreter: Schoppe, Fritz

(56) Entgegenhaltungen:
- US-A- 5 335 331
- PATENT ABSTRACTS OF JAPAN Bd. 007, Nr. 010 (P-168), 14. Januar 1983 (1983-01-14) & JP 57 168346 A (TOKYO SHIBAURA DENKI KK), 16. Oktober 1982 (1982-10-16)

## Beschreibung

Die vorliegende Erfindung bezieht sich auf Prozessorkonfigurationen und insbesondere auf Prozessorkonfigurationen für Prozessoren oder CPUs, bei denen der gesamte zur Verfügung stehende Befehlssatz in verschiedene Gruppen von Befehlen aufgeteilt ist, um die Länge des in einem Programm zu speichernden Befehlscodes zu reduzieren.

Ein Programmierer erzeugt typischerweise ein Computerprogramm unter Verwendung einer hohen Computersprache, wie z. B. C, C++, Fortran, etc. Nach dem Erzeugen des Programms in dieser Hochsprache wird das Programm typischerweise kompiliert, um eine Programmdarstellung zu erzeugen, die für einen Prozessor verständlich ist. Diese Programmdarstellung wird auch als Binärcode bezeichnet. Der Binärcode besteht aus einer festen Abfolge von Programmzeilen bzw. Befehlen, wobei in jeder Programmzeile ein Befehlscode steht. In anderen Worten ausgedrückt, wird jeder Befehl durch einen Befehlscode dargestellt. Die Verarbeitung dieses Binärcodes geschieht dadurch, daß eine CPU den Befehl, auf den der Programmzähler bzw. Program Counter zeigt, in die CPU eingelesen wird. Dieser Vorgang wird auch als Fetch bezeichnet. Die CPU decodiert hierauf diesen Befehl, um aus dem Binär-Befehlscode zu eruieren, was sie tun soll. Dann wird der Befehl ausgeführt. Hierauf wird der Befehlszähler inkrementiert, und es wird nunmehr der Befehl in die CPU eingelesen, auf den der inkrementierte Befehlszähler zeigt. Anschließend wird wieder eine Decodierung dieses Befehls durchgeführt und der Befehl wird schließlich von der CPU ausgeführt. Die Ausführung von Sprungbefehlen geschieht dadurch, daß der Programmzähler z. B. nicht um "1" inkrementiert wird, sondern um einen Wert, der durch den Sprungbefehl angezeigt ist.

Aus dem obigen ist zu sehen, daß die Größe des Programms, d. h. wieviel Speicherplatz das Binärprogramm benötigt, von der Größe des Befehlssatzes der CPU abhängt, d. h. von der Anzahl von Befehlen, die von der CPU ausgeführt werden können. Lediglich aus Darstellungsgründen sei der Fall betrachtet, daß eine CPU 100 verschiedene Befehle zur Verfügung stellt. Dies bedeutet, daß ein Befehlscode mindestens sieben Bits haben muß, da 100 verschiedene Befehle nur mittels einer Sieben-Bit-Zahl eindeutig unterscheidbar dargestellt werden können. Auf den Binärcode bezogen bedeutet dies, daß jede Zeile des Binärcodes, die einen Befehlscode umfaßt, zumindest sieben Bit lang sein muß.

Andererseits wurde herausgefunden, daß insbesondere hochentwickelte CPUs eine Vielzahl von Befehlen zur Verfügung stellen, die nicht so oft benötigt werden. Während beispielsweise Sprungbefehle oder Befehle, die Rechenoperationen mit Konstanten betreffen, sehr häufig benötigt werden, trifft dies nicht zu für komplexere Befehle, wie z. B. Programmsteuerbefehle (PCI; PCI = Program Control Instructions) oder Systemsteuerbefehle (SCI; SCI = System Control Instructions). Dennoch werden typischerweise Befehlcodes so generiert, daß für jede Programmzeile jeder Befehl des Befehlssatzes zur Verfügung gestellt wird, was dadurch erreicht wird, daß jede Programmzeile zumindest die oben beschriebenen sieben Bits lang ist. Damit kann der Fall auftreten, daß ein Programm, das auf bestimmte Befehlshäufen, wie z. B. die Programmsteuerbefehle oder die Systemsteuerbefehle, überhaupt nicht zugreifen muß, dennoch solchermaßen geartete Programmzeilen hat, daß jederzeit ein Zugriff auf diese Befehle möglich ist. Dies führt zu einem erhöhten Speicherbereich für den Binärcode des Programms, der insofern Redundanz hat, daß in den Programmzeilen Bitstellen vorgesehen werden müssen, die letztendlich nicht oder nur mit geringer Wahrscheinlichkeit gebraucht werden.

Das US-Patent Nr. 5,335,331 offenbart einen Mikrocomputer mit einem spezifischen Befehlsbit und einem Modusumschaltungssignal zum Unterscheiden und Ausführen von unterschiedlichen Gruppen von Befehlen in mehreren Betriebsmodi. Ein höchstwertiges Bit (MSB) eines Befehls wird dazu verwendet, um die Arten von Befehlen einer Commen-Befehlsgruppe, Ordinary-Befehlgruppe und Specific-Befehlgruppe zu unterscheiden. Wenn das MSB gleich 1 ist, wird die Common-Befehlsgruppe und die Ordinary-Befehlsgruppe angezeigt. Wenn das Bit dagegen gleich Null ist, wird die Common- und die Specific-Befehlsgruppe angezeigt.

Die Aufgabe der vorliegenden Erfindung besteht darin, ein Verfahren und eine Vorrichtung zum Verarbeiten eines Befehls mittels einer CPU zu schaffen, welche eine Reduzierung des Speicherbedarfs für zu verarbeitende Programme erlauben.

Diese Aufgabe wird durch ein Verfahren zum Verarbeiten gemäß Patentanspruch 1 oder durch eine Vorrichtung zum Verarbeiten gemäß Patentanspruch 10 gelöst.

Der vorliegenden Erfindung liegt die Erkenntnis zugrunde, daß von der Programmcode-Konfiguration weggegangen werden muß, bei der mit jedem Befehlscode auf alle Befehle des Befehlssatzes zugegriffen werden kann. Erfindungsgemäß wird eine Gruppierung der Befehle vorgenommen. Die Befehle des Befehlssatzes werden in eine Mehrzahl von Gruppen gruppiert, wobei die CPU so angesteuert ist, daß immer nur eine Befehlsgruppe aktiv ist. Diese Gruppierung der Befehle gestattet es, die zum Identifizieren der Befehle nötigen Gruppenbefehlscodes im Vergleich zu den üblichen Befehlscodes deutlich zu reduzieren. Werden beispielsweise aus den Eingangs beschriebenen 100 Befehlen zehn Gruppen gebildet, wobei jede der zehn Gruppen zehn Befehle aufweist, so kann der Gruppenbefehlscode, um jeden Befehl einer Gruppe signalisieren zu können, auf vier Bits verkürzt werden. Während eine Programmzeile ohne diese Maßnahme beim beschriebenen Beispiel mindestens sieben Bits benötigt hatte, benötigt eine Programmzeile mit der erfindungsgemäßen Maßnahme nur noch vier Bits, was eine wesentliche Speicherersparnis für den Programmbinärcode bedeutet. Selbstverständlich können dann die gleichen Befehlscodes für verschiedene Befehle vergeben werden. Eine CPU, die derart konfiguriert ist, wird zunächst einen Befehlscode erhalten und dann feststellen, welche Gruppe von Befehlen in der CPU gerade aktiv ist, um dann den richtigen Befehl unter Verwendung des Befehlscodes und der festgestellten aktiven Gruppe auszuführen.

Erfindungsgemäß ist eine sogenannte kontextabhängige Gruppenumschaltung vorgesehen. Jedem Gruppenbefehlscode ist ferner ein Umschaltindex zugeordnet, welcher anzeigt, ob die CPU, wenn sie den aktuellen Befehl erhalten hat, eine Gruppenumschaltung durchführen soll. Erfindungsgemäß wird daher der Umschaltindex des erhaltenen Gruppenbefehlscodes untersucht. Abhängig von dem untersuchten Umschaltindex wird eine Aktivierung einer anderen Gruppe von Befehlen durchgeführt oder es wird die festgestellte Gruppe beibehalten. Hiermit wird auf effiziente Art und Weise ein Übergang von einer Gruppe zu einer anderen Gruppe erreicht, ohne daß externe Eingriffe in die CPU erforderlich sind. Die Umschaltindizes sind derart gewählt, daß logisch sinnvoll zusammenhängende Befehle, wenn sie nicht ohnehin in der gleichen Gruppe gruppiert sind, solche Umschaltindizes haben, daß eine andere Gruppe von Befehlen aktiviert wird, die den Befehl umfaßt, der auf den gerade ausgeführten Befehl typischerweise folgt.

Das erfindungsgemäße Konzept zeichnet sich durch eine hohe Flexibilität dahingehend aus, daß ein Programmierer oder ein automatischer Compiler Umschaltindizes frei zu Befehlen zuordnen kann. Alternativ kann der Programmierer oder der automatische Compiler zu jedem Programm eine optimale Gruppierung der Befehle der CPU generieren, um die Anzahl von Gruppenumschaltungen möglichst gering zu halten.

Ein weiterer Vorteil der vorliegenden Erfindung besteht darin, daß, wie es ausgeführt worden ist, die Länge der Gruppenbefehlscodes deutlich reduziert ist, was sich unmittelbar in Speichereinsparungen auswirkt, was insbesondere für Anwendungen mit stark limitierten Speicherressourcen, wie z. B. Chipkartenanwendungen, von wesentlicher Bedeutung sein kann.

Ein weiterer Vorteil der vorliegenden Erfindung besteht darin, daß gewissermaßen indirekt die Performance der CPU gesteigert wird, da weniger Befehlscodeabrufvorgänge erforderlich sind. Dies wird insbesondere daran deutlich, wenn eine Acht-Bit-CPU betrachtet wird, deren Befehlssatz so groß ist, daß z. B. 16 Bits benötigt werden, um alle Befehle der CPU signalisieren zu können. Aufgrund der Acht-Bit-Busbreite der CPU wird zum Abruf einer Programmzeile ein doppelter Lesevorgang benötigt, da pro Befehl immer 16 Bit eingelesen werden müssen. Wird mit Maßnahmen gemäß der vorliegenden Erfindung eine Gruppierung durchgeführt, derart, daß ein Gruppenbefehlscode nur noch acht Bits hat, so genügt ein einziger Lesevorgang, um eine Programmzeile einlesen zu können. Dies führt zu einer Durchsatzverbesserung der CPU.

Für Einordnung aller zur Verfügung stehender Befehle in verschiedene wählbare Befehlsgruppen können gleiche Gruppenbefehlscodes zu unterschiedlichen Befehlen zugeordnet werden. Die Eindeutigkeit wird dadurch sichergestellt, daß in der CPU immer nur eine Gruppe von Befehlen aktiv sein kann. Die zur Zeit aktive Gruppe hängt somit vom Zustand der CPU ab. Erfindungsgemäß sind die Gruppenbefehlscodes so konfiguriert, daß jedem Befehl ein Umschaltindex zugeordnet ist, derart, daß die Wahl einiger Befehle aus der aktiven Gruppe einen Wechsel in eine andere Befehlsgruppe vorzugsweise nach der Ausführung des aktuellen Befehls bewirkt. Dadurch können mehrere Befehle auf einen gleichen Gruppenbefehlscode belegt werden. Somit können beispielsweise bei einer Acht-Bit-CPU, die Befehlscodes mit ein, zwei oder drei Byte Länge besitzt, möglichst viele zwei und drei Byte lange Befehlscodes auf einen Gruppenbefehlscode mit einer Länge von einem Byte gelegt werden. Neben der Speicherersparnis wird somit auch die Performance der CPU gesteigert, da weniger Gruppenbefehlscodeabrufvorgänge nötig sind.

Die Gruppierung der Befehle in Befehlsgruppen wird vorzugsweise so gewählt, daß eine optimale Codedichte erhalten wird. Optimal bedeutet, daß Befehlsgruppen so angeordnet werden, daß möglichst wenig "redundante" Befehle in den Code eingebaut werden müssen, um von einer aktiven Befehlsgruppe in eine andere aktive Befehlsgruppe zu gelangen, falls ein Befehl benötigt wird, der nicht durch einen automatischen Gruppenwechsel zugänglich gemacht wurde.

Bevorzugte Ausführungsbeispiele der vorliegenden Erfindung werden nachfolgend bezugnehmend auf die beiliegenden Zeichnungen näher erläutert. Es zeigen:
- Fig. 1: ein Blockschaltbild einer erfindungsgemäßen Vorrichtung zum Ausführen eines Befehls;
- Fig. 2: ein Blockschaltbild einer Vorrichtung gemäß einem bevorzugten Ausführungsbeispiel der vorliegenden Erfindung; und
- Fig. 3: ein Schema, das eine bevorzugte Gruppierung von Befehlen in einzelne Gruppen darstellt.

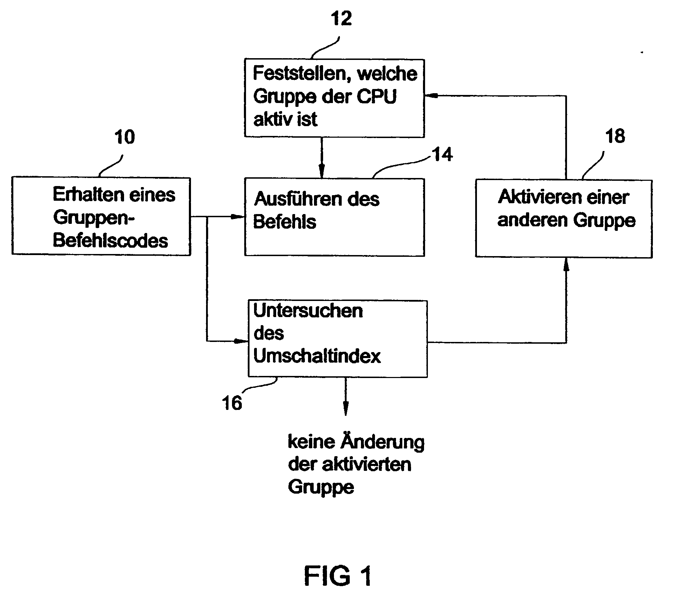

Fig. 1 zeigt eine erfindungsgemäße Vorrichtung zum Verarbeiten eines Befehls mittels einer CPU. Der Befehlssatz enthält eine Anzahl von Befehlen, wobei die Befehle des Befehlssatzes in eine Mehrzahl von Gruppen gruppiert sind. Jeder Befehl einer Gruppe ist durch einen Gruppenbefehlscode dargestellt. Dies bedeutet in anderen Worten, daß unterschiedliche Befehle aus unterschiedlichen Gruppen durch den gleichen Gruppenbefehlscode dargestellt sind. Es kommt dennoch nicht zu Verwirrungen, da immer nur eine Befehlsgruppe aktiv sein kann. Dies bedeutet, daß ein Gruppenbefehlscode immer nur einen Befehl aus der aktiven Befehlsgruppe signalisieren kann. Schließlich ist jedem Befehl ein Umschaltindex zugeordnet, der anzeigt, ob nach Erhalt eines Befehls auf eine andere Gruppe von Befehlen umgeschaltet werden soll oder nicht.

Wie es in Fig. 1 gezeigt ist, umfaßt die erfindungsgemäße Vorrichtung zunächst eine Einrichtung 10 zum Erhalten eines Gruppenbefehlscodes. Ferner enthält die in Fig. 1 gezeigte Vorrichtung eine Einrichtung 12 zum Feststellen, welche Gruppe der CPU gerade aktiv ist. Wenn festgestellt ist, welche Befehlsgruppe gerade aktiv ist, kann der Befehl ausgeführt werden. Hierzu umfaßt die in Fig. 1 gezeigte Vorrichtung eine Einrichtung 14 zum Ausführen des Befehls unter Verwendung des von der Einrichtung 10 erhaltenen Gruppenbefehlscodes und unter Verwendung der von der Einrichtung 12 gelieferten Anzeige für die gerade aktive Befehlsgruppe. Eine Einrichtung 16 zum Untersuchen des Umschaltindex ist mit der Einrichtung 10 wirksam verbunden, um zur Verwendung des Gruppenbefehlscodes den demselben zugeordneten Umschaltindex herauszufinden und zu untersuchen. Stellt die Einrichtung 16 fest, daß der Umschaltindex anzeigt, daß nunmehr eine andere Gruppe aktiviert werden soll, so wird diese Information einer Einrichtung 18 zum Aktivieren einer anderen Gruppe übermittelt, derart, daß, wenn der nächste Gruppenbefehlscode erhalten wird, nunmehr eine andere Befehlsgruppe aktiv ist. Stellt die Einrichtung 16 zum Untersuchen des Umschaltindex dagegen fest, daß der Umschaltindex keine Gruppenumschaltung signalisiert, so wird die aktive Befehlsgruppe beibehalten, derart, daß der nächste erhaltene Gruppenbefehlscode auf einen Befehl der selben Befehlsgruppe hinweist.

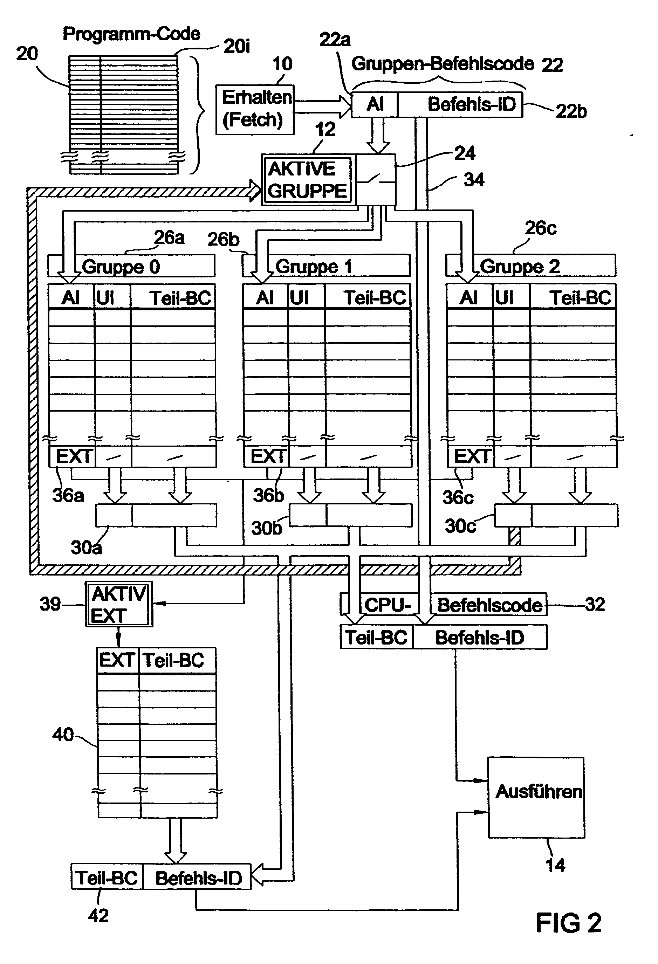

Im nachfolgenden wird auf Fig. 2 Bezug genommen, um ein bevorzugtes Ausführungsbeispiel der vorliegenden Erfindung darzustellen. Bei 20 in Fig. 2 ist ein Binärprogrammcode dargestellt, der aus einer Vielzahl von einzelnen Zeilen 20i besteht. Jede Zeile enthält bei dem in Fig. 2 gezeigten Ausführungsbeispiel einen Gruppenbefehlscode 22, der aufgegliedert ist in einen Auswahlindex 22a und eine Befehls-ID 22b. Mittels der Einrichtung 10 zum Erhalten eines Gruppenbefehlscodes wird eine Zeile 20i nach der anderen des Programmcodes 20 in ein Gruppenbefehlscoderegister eingelesen. Dem Gruppenbefehlscoderegister ist bei dem bevorzugten Ausführungsbeispiel der vorliegenden Erfindung ein Multiplexer nachgeschaltet, der in Fig. 2 nicht gezeigt ist, der jedoch bewirkt, daß der Auswahlindex 22a von der Befehls-ID 22b getrennt werden kann. Der Auswahlindex wird einer Durchschalteinrichtung 24 zugeführt und entweder in eine Nachschlagtabelle 26a für eine Befehlsgruppe 0, in eine Nachschlagtabelle für eine Befehlsgruppe 1 26b oder in eine Nachschlagtabelle für eine Befehlsgruppe 2 26c eingespeist. In welche Nachschlagtabelle 26a - 26c der Auswahlindex 22a eingespeist wird, wird von der Einrichtung 12 bestimmt, die die Schalteinrichtung 24 ansteuert und feststellt, welche Gruppe aktiv ist, d. h. in welche Nachschlagtabelle 26a - 26c der Auswahlindex eingespeist werden muß.

Die Nachschlagtabellen 26a - 26c sind insofern gleich aufgebaut, daß sie eine Vielzahl von Zeilen haben, wobei die Zeile der Nachschlagtabelle durch den Auswahlindex 22a signalisiert wird. Jede Zeile enthält neben einem Auswahlindex einen Umschaltindex UI sowie bei dem hier gezeigten bevorzugten Ausführungsbeispiel der vorliegenden Erfindung einen Teilbefehlscode (Teil-BC). Um aus dem Gruppenbefehlscode 22 nunmehr einen CPU-Befehlscode zu erzeugen, den eine nachgeschaltete CPU mittels der Einrichtung 14 ausführen kann, ist jeder Nachschlagtabelle ein Ausgangsregister 30a, 30b und 30c nachgeschaltet.

Hat die Einrichtung 12 zum Feststellen, welche Gruppe der CPU gerade aktiv ist, beispielsweise festgestellt, daß die Gruppe 0 aktiv ist, so wird der Auswahlindex AI verwendet, um auf die Nachschlagtabelle für die Gruppe 0 (26a) zuzugreifen, und zwar insbesondere auf die Zeile, die durch den Auswahlindex signalisiert ist. Die erfindungsgemäße Vorrichtung ist ferner angeordnet, um den Umschaltindex, der in der durch den Auswahlindex zugegriffenen Zeile steht, ebenso wie den Teilbefehlscode in das Ergebnisregister 30a zu laden. Der Umschaltindex wird dazu verwendet, um eine andere Gruppe zu aktivieren, d. h. die Umschalteinrichtung 24 umzusteuern, oder aber, um zu signalisieren, daß keine Gruppenumschaltung erforderlich ist. Der Teilbefehlscode wird dagegen einem Befehlscoderegister 32 zugeführt, in dem der Teilbefehlscode und die aus dem Gruppenbefehlscode über eine Leitung 34 erhaltene Befehls-ID zusammengefügt werden, um den CPU-Befehlscode 32 zu erhalten, den die CPU ausführen kann, wie es durch die Einrichtung 14 symbolisiert ist.

Das in Fig. 2 gezeigte Ausführungsbeispiel eignet sich gewissermaßen als "Schale" für eine bestehende CPU. Deshalb werden die Gruppenbefehlscodes und insbesondere die Befehls-ID des Gruppenbefehlscodes mittels der in den Nachschlagtabellen gespeicherten Teilbefehlscodes in einen ursprünglichen für die CPU geeigneten CPU-Befehlscode 32 umgeformt. Dies kann einfach durch Aneinanderfügen des Teilbefehlscodes und der Befehls-ID erfolgen. Alternativ kann dies jedoch auch durch Rechenoperationen erreicht werden. Es hat sich jedoch herausgestellt, daß die Verwendung einer Nachschlagtabelle und das einfache Zusammenfügen am effizientesten sind.

Wie es ausgeführt worden ist, ist jedem Gruppenbefehlscode ein Umschaltindex zugeordnet. Der Umschaltindex kann entweder direkt im Gruppenbefehlscode angeordnet sein oder die Zuordnung zwischen Gruppenbefehlscode und Umschaltindex, d. h. ob ein Gruppenbefehlscode eine Umschaltung in eine andere Befehlsgruppe bewirken soll oder nicht, kann, wie es in Fig. 2 gezeigt ist, gewissermaßen indirekt erfolgen, derart, daß der eigentliche Umschaltindex in der Nachschlagtabelle gespeichert ist, und zunächst durch den Auswahlindex, der in dem Gruppenbefehlscode enthalten ist, ein bestimmter Umschaltindex ausgewählt wird.

Startet die erfindungsgemäße Vorrichtung, so wird vorzugsweise vereinbart, daß immer die Befehlsgruppe 0 aktiv ist. Dasselbe trifft nicht nur für einen Programmstart zu, sondern auch für einen Reset. Hierauf wird der erste Gruppenbefehlscode 22 über die Einrichtung 10 vom Speicher geladen. Die Einrichtung 12, die einfach aus einem CPU-Statusregister bestehen kann, aktiviert dann, wie es ausgeführt worden ist, die entsprechende Gruppennachschlagtabelle 26a - 26c. Der Auswahlindex im Gruppenbefehlscode bestimmt die Zeile der aktivierten Nachschlagtabelle. Hierauf wird, wie es ausgeführt worden ist, fortgefahren, bis ein Befehl ausgeführt worden ist, und bis eine eventuell durch diesen Befehl bedingte Gruppenumschaltung erreicht worden ist. Dann wird der nächste Befehl geladen, die entsprechende Gruppennachschlagtabelle aktiviert und, wie ausgeführt, fortgefahren.

Im nachfolgenden wird auf eine weitere bevorzugte Ausführungsform der vorliegenden Erfindung ebenfalls anhand von Fig. 2 Bezug genommen. Die erfindungsgemäße Befehlsverwaltung ermöglicht es, sogenannte Extended-Befehle zu klassifizieren. Extended-Befehle gehören zu einer Gruppe von Befehlen und sind dadurch charakterisiert, daß sie vereinbarungsgemäß keine Gruppenumschaltung bewirken. Wieder wird, wie es bezugnehmend auf eine "normale" Gruppenumschaltung diskutiert worden ist, der Auswahlindex aus dem Gruppenbefehlscode 22 extrahiert. Der Auswahlindex wird, wenn es sich um einen Extended-Befehl handelt, derart gestaltet sein, daß eine Zeile in der Nachschlagtabelle der betreffenden Gruppe durch den Auswahlindex bezeichnet wird, die vereinbarungsgemäß einen Extended-Befehl signalisiert. Dies ist durch ein Feld 36a - 36c für die drei Gruppen 0, 1 und 2 in Fig. 2 dargestellt. Für einen Extended-Befehl wird es bevorzugt, keinen Teilbefehlscode zu verwenden. Statt dessen wird auf die eigene Extended-Tabelle 40 mittels einer Einrichtung 39 zugegriffen, die anzeigt, daß Extended aktiv ist. Der Tabelleneintrag wird durch Einrichtung 39 unter Verwendung des entsprechenden Extended-Befehls-Index (36a - 36c) selektiert. Aus der Tabelle 40 wird der Teilbefehlscode für den Extended-Befehl ermittelt und dann mit der Befehls-ID 22b in einem Extended-Ergebnisregister 42 zusammengefügt, um den CPU-Befehlscode für den Extended-Befehl zu erhalten. Dieser CPU-Befehlscode für den Extended-Befehl wird dann der Einrichtung 14 zum Ausführen des Befehls zugeführt, um ausgeführt zu werden. Da es sich um einen Extended-Befehl handelt, wird kein Gruppenwechsel durchgeführt, d. h. es muß keine Untersuchung eines Umschaltindex etc. durchgeführt werden. Der nächste Befehl des Programmcodes 20 nach dem Extended-Befehl wird wieder aus derselben aktiven Gruppe sein.

Wie es bereits ausgeführt worden ist, ist nach einem Reset-Ereignis immer Gruppe 0 aktiv. Sowohl die aktive Gruppe als auch die aktive Extended-Unterklasse sind in einem CPU-Statusregister 12 bzw. 39 angezeigt.

Es kann in diesem Statuswort bzw. Statusregister festgelegt werden, ob die Extended-Unterklasse automatisch nach jedem ausgeführten Befehlscode geändert wird, oder ob diese manuell festzulegen ist.

Ferner sei darauf hingewiesen, daß, wie es ausgeführt worden ist, in den Gruppennachschlagtabellen vorzugsweise ein Bereich existiert, der festlegt, ob es sich um einen Extended-Eintrag 36a, 36b, 36c handelt oder nicht. Der Bereich kann entweder festgelegt sein oder ein Eintrag kann beispielsweise durch ein eigenes Status-Bit, das in Fig. 2 nicht dargestellt ist, zu einem Extended-Eintrag deklariert werden.

Es sei darauf hingewiesen, daß die Nachschlagtabellen für die Gruppen fest in einem ROM implementierte Tabellen sein können. Alternativ können die Tabellen natürlich auch als Speicher (RAM) vorzugsweise in den Registern der CPU implementiert sein. Dann existiert die Möglichkeit, am Anfang des Programmablaufs oder aber während der Laufzeit des Programms die Gruppen nach Belieben zu ändern. Während die ROM-Alternative den Vorteil hat, daß keine Tabellen aufgebaut werden müssen bzw. zu Beginn der Ausführung eines Programms in die Speichertabellen geladen werden müssen, hat die Speichertabellenalternative den Vorteil, daß eine wesentliche Flexibilität besteht und daß jedem Programm eine eigene Befehlsgruppierung zugewiesen werden kann, die dann vor Ausführung des Programms selbst in die Speichertabellen geladen werden kann. Dann hat jedes Programm seine eigenen Nachschlagtabellen. Die Nachschlagtabellen können somit fest oder variabel gestaltet sein.

Es sei darauf hingewiesen, daß die Funktion der Nachschlagtabellen auch durch eine Kombinatorik alleine oder durch eine Kombination aus Kombinatorik und reduzierten Nachschlagtabellen realisiert werden kann.

Zur Befehlsgruppierung empfiehlt es sich, den gesamten Befehlsraum oder Befehlssatz in gleich große Befehlsgruppen aufzuteilen. Durch diese Aufteilung in gleich große Befehlsgruppen lassen sich die Nachschlagtabellen leichter und effizienter generieren.

Ferner wird es bevorzugt, die Befehlsgruppen in drei Kategorien zu klassifizieren, nämlich in Befehle, die eine Gruppenumschaltung bewirken, in Befehle, die keine Gruppenumschaltung bewirken, und in spezielle Extended-Befehle, bei denen ebenfalls keine Gruppenumschaltung stattfindet.

Schließlich sind Gruppenbefehlscodeblöcke mit jeweiligen Unterklassen, die zu einer Gruppe gehören, zu belegen. Dieses Verfahren muß für jede Gruppe durchgeführt werden, da auch jede Gruppe eine eigene Nachschlagtabelle benötigt, wie es in Fig. 2 gezeigt ist. Es können alternativ auch mehrere Gruppenbefehlscodeblöcke von einer Unterklasse belegt werden, falls diese vom Umfang her zu groß für einen einzigen Gruppenbefehlscodeblock ist. Die Extended-Unterklasse belegt auch einen oder mehrere Gruppenbefehlscodeblöcke, wobei der resultierende Befehl dann durch das Statuswort 39 festgelegt wird. Weiterhin muß für jede Gruppentabelle festgelegt werden, welcher Befehlscodeblock eine Gruppenumschaltung bewirkt. Dies geschieht durch den Umschaltindex UI in den Nachschlagtabellen 26a - 26c von Fig. 2.

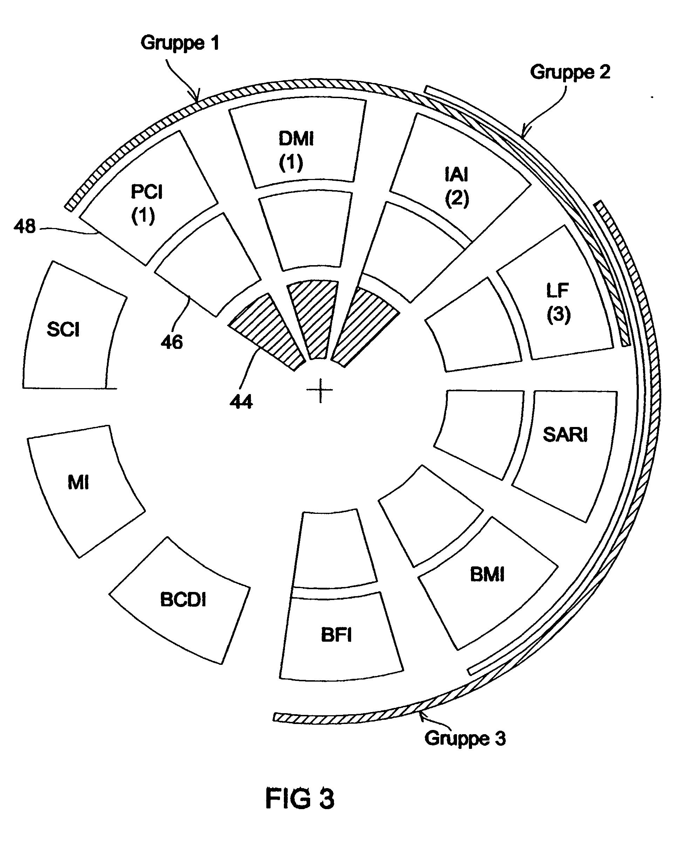

Im nachfolgenden wird anhand von Fig. 3 auf mögliche Befehlsgruppeneinteilungen eingegangen. Ein typischer Befehlssatz einer CPU gliedert sich auf in Datenbewegungsbefehle (DMI; DMI = Data Movement Instructions), Ganzzahlarithmetikbefehle (IAI; IAI = Integer Arithmetic Instructions), logische Funktionen (LF; LF = Logical Functions), Verschieben-und-Rotations-Befehle (SARI; SARI = Shift and Rotate Instructions), Bitmanipulationsbefehle (BMI; BMI = Bit Manipulation Instructions), Bitfeldbefehle (BFI; BFI = Bit Field Instructions), Programmsteuerbefehle (PCI; PCI = Program Control Instructions), Systemsteuerbefehle (SCI; SCI = System Control Instructions) und Multiprozessorbefehle (MI; MI = Multiprocessor Instructions). Bei dem in Fig. 3 gezeigten Ausführungsbeispiel zur Gruppeneinteilung gehören die Befehle der Befehlshäufen PCI, DMI, IAI, LF zur Gruppe 1, während die Befehlshäufen IAI, LF, SARI und BMI zur Gruppe 2 gehören. Schließlich gehören die Befehlshäufen LF, SARI, BMI und BFI zur Gruppe 3. Die Umschaltindizes der Häufen PCI und DMI sind, wie es in Fig. 3 durch die Zahl in Klammern dargestellt ist, so konfiguriert, daß keine Gruppenumschaltung durchgeführt wird, während bei einem Befehl aus dem Haufen IAI eine Umschaltung zur Gruppe 2 stattfindet und bei einem Befehl aus dem Haufen LF eine Gruppenumschaltung in die Gruppe 3 stattfindet. Falls Gruppe 2 oder 3 aktiv ist, so wird eine Umschaltung durch einen Basisbefehl der Klasse DMI oder PCI der Gruppe 1 durchgeführt. Das Bezugszeichen 44 in Fig. 3 bezeichnet eine Basis-Unterklasse, das Bezugszeichen 46 bezeichnet eine Standard-Unterklasse, und das Bezugszeichen 48 schließlich eine Extended-Unterklasse.

Bei einem bevorzugten Ausführungsbeispiel der vorliegenden Erfindung finden sich in jeder Gruppe sogenannte Basisrechenbefehle, welche am häufigsten benötigt werden, wie z. B. Befehle, die sich auf das Kopieren von Konstanten von einem Ursprungsbereich zu einem Zielbereich beziehen, oder Befehle, die sich auf Registeroperationen oder Adreßregisteroperationen beziehen. Dagegen finden sich relativ ausgefallene Befehle, wie z. B. Systemsteuerbefehle oder Programmsteuerbefehle, in einer Extended-Unterklasse, da sie selten benötigt werden und daher, wenn diese Befehle benötigt werden, eine beispielsweise mittels eines Dummy-Befehls erreichte Gruppenumschaltung vertretbar ist, oder durch explizites Aktivieren der Extended-Unterklasse durch eine Änderung des Statusworts, das die aktive Extended-Unterklasse festlegt.

### Bezugszeichenliste

- 10: Einrichtung zum Erhalten eines Gruppenbefehlscodes
- 12: Einrichtung zum Feststellen, welche Gruppe der CPU aktiv ist
- 14: Einrichtung zum Ausführen des Befehls
- 16: Einrichtung zum Untersuchen des Umschaltindex
- 18: Einrichtung zum Aktivieren einer anderen Gruppe
- 20: Programmcode
- 20i: Programmzeile
- 22: Gruppenbefehlscode
- 22a: Auswahlindex
- 22b: Befehls-ID
- 24: Gruppenumschalteinrichtung
- 26a: Nachschlagtabelle für Gruppe 0
- 26b: Nachschlagtabelle für Gruppe 1
- 26c: Nachschlagtabelle für Gruppe 2
- 30a: Ausgaberegister für Gruppe 0
- 30b: Ausgaberegister für Gruppe 1
- 30c: Ausgaberegister für Gruppe 2
- 32: CPU-Befehlscode
- 36a: Extended-Bereich für Gruppe 0
- 36b: Extended-Bereich für Gruppe 1
- 36c: Extended-Bereich für Gruppe 2
- 39: Einrichtung zum Feststellen, ob Extended aktiv ist
- 40: Extended-Nachschlagtabelle
- 42: Extended-Ausgaberegister
- 44: Basis-Unterklasse
- 46: Standard-Unterklasse
- 48: Extended-Unterklasse

## Patentansprüche

1. Verfahren zum Verarbeiten eines Befehls mittels einer CPU aus einem Befehlssatz mit einer Anzahl von Befehlen, wobei die Befehle des Befehlssatzes in eine Mehrzahl von Gruppen gruppiert sind, wobei jeder Befehl einer Gruppe durch einen Gruppenbefehlscode (22) dargestellt ist, mit folgenden Schritten:
Erhalten (10) eines Gruppenbefehlscodes (22);
Feststellen (12), welche Gruppe von Befehlen in der CPU gerade aktiv ist;
Ausführen (14) des Befehls unter Verwendung des Gruppenbefehlscodes und der festgestellten aktiven Gruppe;
**dadurch gekennzeichnet, daß** einem Befehl ein Umschaltindex zugeordnet ist, der anzeigt, ob nach einem Erhalt des Befehls auf eine andere Gruppe von Befehlen umgeschaltet werden soll oder nicht, und durch die folgende Schritte **gekennzeichnet** :
Untersuchen (16) des Umschaltindex, der dem erhaltenen Gruppenbefehlscode zugeordnet ist; und
Aktivieren (18) einer anderen Gruppe von Befehlen oder Beibehalten der festgestellten Gruppe, abhängig von dem untersuchten Umschaltindex.

2. Verfahren gemäß Anspruch 1, bei dem eine Anzeige der in der CPU gerade aktiven Gruppe durch einen Gruppenindex in einem Statusregister der CPU gegeben ist, und bei dem der Schritt des Feststellens ein Zugreifen auf das Statusregister der CPU aufweist, um den Gruppenindex zu lesen.

3. Verfahren gemäß Anspruch 1 oder 2, bei dem der Umschaltindex, der einem Befehl zugeordnet ist, Teil des Befehlscodes ist, und bei dem im Schritt des Untersuchens der Umschaltindex aus dem Befehlscode extrahiert wird.

4. Verfahren gemäß Anspruch 1 oder 2, bei dem in der CPU für jede Gruppe eine Nachschlagtabelle (26a, 26b, 26c) gespeichert ist, wobei jedem Befehl der Gruppe ein Eintrag in der Nachschlagtabelle zugeordnet ist, wobei der Eintrag den Umschaltindex aufweist, wobei dem Umschaltindex ein Auswahlindex zugeordnet ist, der Teil des Gruppenbefehlscodes (22) ist, und wobei der Schritt des Untersuchens des Umschaltindex folgende Schritte aufweist:
Extrahieren des Auswahlindex (AI) aus dem Gruppenbefehlscode (22);
Zugreifen auf die Nachschlagtabelle (26a - 26c) für die aktive Gruppe unter Verwendung des Auswahlindex; und
Lesen des dem Auswahlindex zugeordneten Umschaltindex aus der Nachschlagtabelle für die aktive Gruppe.

5. Verfahren gemäß Anspruch 4, bei dem für jeden Befehl des Befehlssatzes ein CPU-Befehlscode vordefiniert ist, bei dem in einer Nachschlagtabelle (26a - 26c) für eine Gruppe ein Teilbefehlscode in Zuordnung zu einem Befehl der Gruppe gespeichert ist, und bei dem der Gruppenbefehlscode zusammen mit dem Teilbefehlscode den CPU-Befehlscode ergibt, wobei der Schritt des Ausführens (14) des Befehls folgende Schritte aufweist:
Zugreifen auf die Nachschlagtabelle für die aktive Gruppe unter Verwendung des Auswahlindex;
Ermitteln des dem Auswahlindex zugeordneten Teilbefehlscodes;
Kombinieren des Teilbefehlscodes und des Gruppenbefehlscodes, um den CPU-Befehlscode zu erhalten; und
Ausführen des dem CPU-Befehlscode zugeordneten Befehls.

6. Verfahren gemäß einem der vorhergehenden Ansprüche, bei dem eine Gruppe von Befehlen eine Extended-Unterklasse aufweist, wobei die Extended-Unterklasse Befehle umfaßt, die keine Gruppenumschaltung bewirken, wobei das Verfahren ferner folgende Schritte aufweist:
Feststellen, ob der erhaltene Befehl aus der Extended-Unterklasse ist; und
falls dies der Fall ist, Ausführen des Befehls und Erhalten eines weiteren Befehls, ohne daß eine andere Gruppe aktiviert wird.

7. Verfahren gemäß einem der vorhergehenden Ansprüche, bei dem eine Gruppe von Befehlen eine Basisklasse und eine Standardklasse aufweist, wobei die Basisklasse Befehle enthält, die in allen Gruppen von Befehlen vorhanden sind.

8. Verfahren gemäß Anspruch 7, bei dem die Basisklasse Sprungbefehle und Befehle, die sich auf eine Konstante oder einfache Registeroperationen beziehen, aufweist.

9. Verfahren gemäß einem der vorhergehenden Ansprüche, bei dem die Befehle des Befehlssatzes in Befehlshäufen aufteilbar sind, wobei die Befehlshäufen Datenbewegungsbefehle, Ganzzahlarithmetikbefehle, logische Funktionen, Verschieben-und-Rotations-Befehle, Bitmanipulationsbefehle, Bitfeldbefehle, Programmsteuerbefehle, Systemsteuerbefehle oder Multiprozessorbefehle umfassen, wobei die Befehlsgruppierung so gewählt ist, daß in einer Gruppe von Befehlen eine Mehrzahl von Häufen von Befehlen vorhanden ist.

10. Vorrichtung zum Verarbeiten eines Befehls mittels einer CPU aus einem Befehlssatz mit einer Anzahl von Befehlen, wobei die Befehle des Befehlssatzes in eine Mehrzahl von Gruppen gruppiert sind, wobei jeder Befehl einer Gruppe durch einen Gruppenbefehlscode (22) dargestellt ist, und wobei einem Befehl ein Umschaltindex zugeordnet ist, der anzeigt, ob nach einem Erhalt des Befehls auf eine andere Gruppe von Befehlen umgeschaltet werden soll oder nicht, mit folgenden Merkmalen:
einer Einrichtung zum Erhalten (10) eines Gruppenbefehlscodes (22);
einer Einrichtung zum Feststellen (12), welche Gruppe von Befehlen in der CPU gerade aktiv ist;
einer Einrichtung zum Ausführen (14) des Befehls unter Verwendung des Gruppenbefehlscodes und der festgestellten aktiven Gruppe;
einer Einrichtung zum Untersuchen (16) des Umschaltindex, der dem erhaltenen Gruppenbefehlscode zugeordnet ist; und
einer Einrichtung zum Aktivieren (18) einer anderen Gruppe von Befehlen oder Beibehalten der festgestellten Gruppe, abhängig von dem untersuchten Umschaltindex.

## Claims

1. A method for processing an instruction from a set of instructions with a number of instructions by a CPU, wherein the instructions of the set of instructions are grouped into a plurality of groups, wherein every instruction of a group is represented by a group instruction code (22), comprising the steps of:
receiving (10) a group instruction code (22);
determining (12) which group of instructions is currently active in the CPU;
executing (14) the instruction by using the group instruction code and the determined active group;
**characterized in that** a switching index is associated to an instruction, indicating whether after receiving the instruction switching to another group of instructions is to be performed or not, **characterized by** the following steps:
examining (16) the switching index associated to the received group instruction code; and
activating (18) another group of instructions or maintaining the determined group in dependence on the examined switching index.

2. The method according to claim 1, wherein an indication of the group currently active in the CPU is given by a group index in a state register of the CPU, and wherein the step of determining comprises accessing the state register of the CPU to read the group index.

3. The method according to claim 1 or 2, wherein the switching index associated to an instruction is part of the instruction code, and wherein in the step of examining the switching index is extracted from the instruction code.

4. The method according to claim 1 or 2, wherein a lookup table (26a, 26b, 26c) is stored in the CPU for every group, wherein an entry in the lookup table is associated to every instruction of the group, wherein the entry has the switching index, wherein a selection index, which is part of the group instruction code (22), is associated to the switching index, the step of examining the switching index comprising:
extracting the selection index (AI) from the group instruction code (22);
accessing the lookup table (26a - 26c) for the active group by using the selection index; and
reading the switching index associated to the selection index from the lookup table for the active group.

5. The method according to claim 4, wherein a CPU instruction code is predefined for every instruction of the set of instructions, wherein a sub-instruction code associated to an instruction of a group is stored for the group in a lookup table (26a - 26c), and wherein the group instruction code together with the sub-instruction code results in the CPU instruction code, the step of executing (14) the instruction comprising:
accessing the lookup table for the active group by using the selection index;
finding out the sub-instruction code associated to the selection index;
combining the sub-instruction code and the group instruction code to receive the CPU instruction code; and
executing the instruction associated to the CPU instruction code.

6. The method according to one of the previous claims, wherein a group of instructions comprises an extended sub-class, the extended sub-class comprising instructions effecting no group switching, the method further comprising the steps of:
determining whether the received instruction is from the extended sub-class; and
if this is the case, executing the instruction and receiving a further instruction without activating another group.

7. The method according to one of the previous claims, wherein a group of instructions comprises a base class and a standard class, the base class including instructions present in all groups of instructions.

8. The method according to claim 7, wherein the base class has jump instructions and instructions relating to a constant or simple register operations.

9. The method according to one of the previous claims, wherein the instructions of the set of instructions can be divided into instruction clusters, wherein the instruction clusters comprise data movement instructions, integer arithmetic instructions, logical functions, shift and rotation instructions, bit manipulation instructions, bit field instructions, program control instructions, system control instructions or multiprocessor instructions, wherein the grouping of instructions is chosen such that a plurality of clusters of instructions is present in a group of instructions.

10. An apparatus for processing an instruction from a set of instructions with a number of instructions by a CPU, wherein the instructions of the set of instructions are grouped in a plurality of groups, wherein every instruction of a group is represented by a group instruction code (22), and wherein a switching index is associated to an instruction, indicating whether after receiving the instruction switching to another group of instructions is to be performed or not, comprising:
a means for receiving (10) a group instruction code (22);
a means for determining (12) which group of instructions is currently active in the CPU;
a means for executing (14) the instruction by using the group instruction code and the determined active group;
a means for examining (16) the switching index associated to the received group instruction code; and
a means for activating (18) another group of instructions or maintaining the determined group in dependence on the examined switching index.

## Revendications

1. Procédé de traitement d'une instruction, au moyen d'une CPU, provenant d'un ensemble d'instructions comportant un grand nombre d'instructions, les instructions de l'ensemble d'instructions étant regroupées en une pluralité de groupes, chaque instruction d'un groupe étant représentée par un code d'instruction de groupe (22), ledit procédé comportant les étapes suivantes consistant à :
obtenir (10) un code d'instruction de groupe (22) ;
déterminer (12) le groupe d'instructions qui est précisément actif dans la CPU ;
exécuter (14) l'instruction en utilisant le code d'instructions de groupe et le groupe actif déterminé ;
**caractérisé ce qu'**il est associé à une instruction un index de commutation qui indique si, après réception de l'instruction, on doit ou non commuter sur un autre groupe d'instructions et **caractérisé par** les étapes suivantes consistant à :
rechercher (16) l'index de commutation, qui est associé au code d'instruction de groupe reçu ; et
activer (18) un autre groupe d'instructions ou conserver le groupe déterminé en fonction de l'index de commutation recherché.

2. Procédé selon la revendication 1, dans lequel une indication du groupe précisément actif dans la CPU est donnée par un index de groupe dans un registre d'état de la CPU, et dans lequel l'étape de détermination comporte un accès au registre d'état de la CPU pour lire l'index de groupe.

3. Procédé selon la revendication 1 ou 2, dans lequel l'index de commutation, qui est associé à une instruction, fait partie du code d'instruction, et dans lequel à l'étape de recherche l'index de commutation est extrait du code d'instruction.

4. Procédé selon la revendication 1 ou 2, dans lequel une table de consultation (26a, 26b, 26c) est mémorisée pour chaque groupe dans la CPU, une entrée de la table de consultation étant associée à chaque instruction du groupe, l'entrée comportant l'index de commutation, un index de sélection qui fait partie du code d'instruction de groupe (22) étant associé à l'index de commutation, et l'étape de recherche de l'index de commutation comportant les étapes suivantes consistant à :
extraire l'index de sélection (AI) du code d'instruction de groupe (22) ;
accéder à la table (26a à 26c) de consultation du groupe actif en utilisant l'index de sélection ; et
lire l'index de commutation associé à l'index de sélection dans la table de consultation du groupe actif.

5. Procédé selon la revendication 4, dans lequel il est préalablement défini pour chaque instruction de l'ensemble d'instructions un code d'instruction de CPU dans lequel un code d'instruction secondaire est mémorisé en association avec une instruction du groupe dans une table (26a à 26c) de consultation d'un groupe, et dans lequel le code d'instruction de groupe donne conjointement avec le code d'instruction secondaire le code d'instruction de CPU, l'étape consistant à exécuter (14) l'instruction comportant les étapes suivantes consistant à :
accéder à la table de consultation du groupe actif en utilisant l'index de sélection ;
déterminer le code d'instruction secondaire associé à l'index de sélection ;
combiner le code d'instruction secondaire et le code d'instruction de groupe pour obtenir le code d'instruction de CPU ; et
exécuter l'instruction associée au code d'instruction de CPU.

6. Procédé selon l'une des revendications précédentes, dans lequel un groupe d'instructions comporte une sous-classe Extended, la sous-classe Extended comportant des instructions qui ne génèrent aucune commutation de groupe, le procédé comprenant en outre les étapes suivantes consistant à :
déterminer si l'instruction obtenue provient de la sous-classe Extended ; et
si c'est le cas, exécuter l'instruction et obtenir une autre instruction sans activer un autre groupe.

7. Procédé selon l'une des revendications précédentes, dans lequel un groupe d'instructions comporte une classe de base et une classe standard, la classe de base contenant des instructions qui existent dans tous les groupes d'instructions.

8. Procédé selon la revendication 7, dans lequel la classe de base comporte des instructions de saut et des instructions qui concernent une constante ou des opérations de registre simples.

9. Procédé selon l'une des revendications précédentes, dans lequel les instructions de l'ensemble d'instructions peuvent être réparties en piles d'instructions, les piles d'instructions comportant des instructions de déplacement de données, des instructions d'arithmétique de nombres entiers, des fonctions logiques, des instructions de translation et de rotation, des instructions de manipulation de bits, des instructions de zones de bits, des instructions de commande de programme, des instructions de commande de système ou des instructions multiprocesseurs, le regroupement des instructions étant choisi de telle sorte qu'il y a une pluralité de piles d'instruction dans un groupe d'instructions.

10. Dispositif de traitement d'une instruction, au moyen d'une CPU, provenant d'un ensemble d'instructions comportant un grand nombre d'instructions, les instructions de l'ensemble d'instructions étant regroupées en une pluralité de groupes, chaque instruction d'un groupe étant représentée par un code d'instruction de groupe (22), à une instruction étant associé un index de commutation qui indique si, après réception de l'instruction, on doit commuter sur un autre groupe d'instructions, le dispositif comprenant les caractéristiques suivantes :
un dispositif d'obtention (10) d'un code d'instruction de groupe (22) ;
un dispositif de détermination (12) du groupe d'instructions qui est précisément actif dans la CPU ;
un dispositif d'exécution (14) de l'instruction en utilisant le code d'instructions de groupe et le groupe actif déterminé ;
un dispositif de recherche (16) de l'index de commutation qui est associé au code d'instruction de groupe reçu ; et
un dispositif d'activation (18) d'un autre groupe d'instructions ou de conservation du groupe déterminé en fonction de l'index de commutation recherché.
